# FASCICULE DE BREVET EUROPEEN

(11) **EP 3 712 029 B1**
(45) Date de publication et mention de la délivrance du brevet: **15.12.2021**
(21) Numéro de dépôt: 20163083.7
(22) Date de dépôt: 13.03.2020
(51) Int. Cl.: B61D 1/06, B62D 31/04

(54) **VOITURE À PLUSIEURS NIVEAUX À PLANCHER DÉCALÉ**
FAHRZEUG MIT MEHREREN ETAGEN UND VERSETZTEM BODEN
CAR WITH SEVERAL LEVELS WITH OFFSET FLOOR

(30) Priorité: 18.03.2019 FR 1902764
(43) Date de publication de la demande: 23.09.2020
(73) Titulaire: ALSTOM Transport Technologies, 93400 Saint-Ouen (FR)
(72) Inventeur: DIEU, Jérémy, 17430 TONNAY-CHARENTE (FR)
(74) Mandataire: Lavoix

(56) Documents cités:
- WO-A1-2014/063892
- FR-A1- 2 846 291
- JP-A- S60 179 373
- US-A- 1 588 906
- US-A1- 2003 056 686

## Description

La présente invention concerne une voiture à plusieurs niveaux, comprenant un niveau inférieur et un niveau supérieur séparés par un plancher intermédiaire, le plancher intermédiaire comprenant une partie basse, une partie haute et une partie de transition,
la partie basse et la partie haute s'étendant chacune entre la partie de transition et une paroi latérale respective de la voiture, à des hauteurs respectives différentes l'une de l'autre selon une direction d'élévation.

Il est connu, notamment pour les véhicules ferroviaires ou routiers destinés au transport de voyageurs, d'employer des voitures à deux niveaux afin d'augmenter le nombre de places disponibles pour une même surface au sol occupée.

La séparation de l'espace interne de la voiture en deux niveaux superposés entraine des contraintes sur la hauteur sous plafond à chacun des deux niveaux. Cette hauteur limitée n'est pas forcément gênante pour les passagers installés sur des sièges, mais peut s'avérer pénible pour ceux qui circulent dans les allées, notamment pour les personnes de haute taille.

De plus, les contraintes toujours plus fortes d'isolation acoustique et thermique imposent des épaisseurs de matériaux plus importantes, qui aboutissent à un espace interne réduit dans les voitures.

Des exemples de voitures à deux niveaux sont décrits dans les documents FR 2846291 A1, US 1588906 A et WO 2014/063892 A1.

Cependant, il n'est généralement pas possible de modifier la hauteur totale des voitures pour augmenter les hauteurs sous plafond. En effet, la plupart des tunnels, quais et installations sont calibrés spécifiquement pour les gabarits actuels des véhicules, et sont difficilement adaptables, notamment en hauteur.

Il existe donc un besoin pour un agencement particulier des voitures à deux niveaux permettant de faciliter la circulation dans les allées tout en maintenant un même nombre de places assises et sans modifier le gabarit du véhicule.

Un but de l'invention est ainsi de fournir une voiture de véhicule à plusieurs niveaux dans laquelle la hauteur disponible pour la circulation des passagers est augmentée, sans modification du gabarit de la voiture.

Ainsi, l'invention a pour objet une voiture selon la revendication 1.

Selon des modes de réalisation particuliers, la voiture selon l'invention comprend l'une ou plusieurs des caractéristiques des revendications 2 à 8, prise(s) isolément ou selon toute combinaison techniquement réalisable.

L'invention sera mieux comprise à la lecture de la description qui suit, donnée uniquement à titre d'exemple et faite en référence aux dessins annexés, parmi lesquels :
[Fig 1] la figure 1 est une vue en coupe d'une voiture selon un premier mode de réalisation de l'invention ;
[Fig 2] la figure 2 est une vue en coupe d'une voiture selon un autre mode de réalisation de l'invention ; et
[Fig 3] la figure 3 est une vue en coupe d'une voiture selon un troisième mode de réalisation de l'invention.

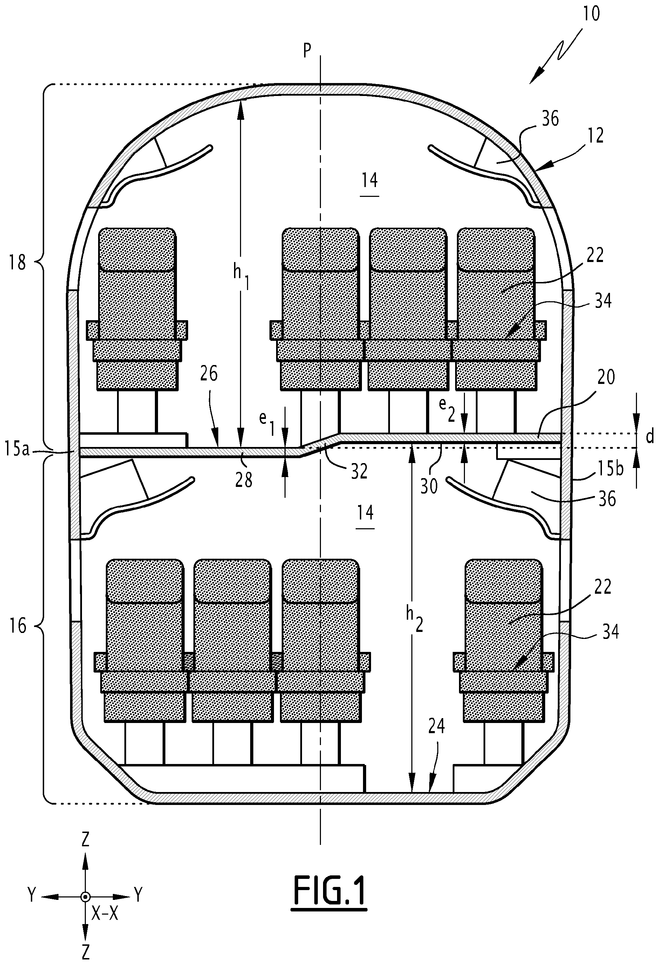

Une voiture 10 selon l'invention est représentée en coupe transversale sur la figure 1. La voiture 10 comprend une caisse 12 délimitant un espace interne 14. La voiture 10 est notamment une voiture de véhicule ferroviaire à deux niveaux, par exemple un train à grande vitesse, ou un tramway.

En variante (non représentée), la voiture 10 est une voiture de véhicule routier à deux niveaux, par exemple un car articulé.

La voiture 10 est décrite relativement à une direction longitudinale X-X s'étendant selon le sens de circulation normal de la voiture 10, une direction transversale Y-Y perpendiculaire à la direction longitudinale X-X et horizontale dans les conditions normales de circulation de la voiture 10, et une direction d'élévation Z-Z verticale dans les conditions normales de circulation de la voiture 10.

La caisse 12 comprend des parois latérales 15a, 15b ainsi que des parois supérieure et inférieure, qui délimitent entre elles l'espace interne 14.

Un plan médian P de la voiture 10 est représenté, s'étendant perpendiculairement à la direction transversale Y-Y, à égale distance des parois latérales 15a, 15b.

L'espace interne 14 est séparé en un niveau inférieur 16 de la voiture 10 et un niveau supérieur 18 de la voiture 10 par un plancher 20 intermédiaire. La voiture 10 comprend avantageusement au moins un escalier (non représenté) permettant le passage des voyageurs du niveau inférieur 16 au niveau supérieur 18 et inversement.

Le niveau inférieur 16 s'étend en dessous du niveau supérieur 18 et du plancher 20 selon la direction d'élévation Z-Z. Le niveau supérieur 18 s'étend au-dessus du niveau inférieur 16 et du plancher 20 selon la direction d'élévation Z-Z.

L'espace interne 14 est notamment destiné à accueillir des voyageurs, à la fois au niveau inférieur 16 et au niveau supérieur 18. A cet effet, le niveau inférieur 16 et le niveau supérieur 18 comprennent chacun une pluralité de sièges 22, ainsi qu'une allée inférieure 24 et une allée supérieure 26 respectivement.

Les sièges 22 sont disposés selon des rangées s'étendant parallèlement les unes aux autres, et parallèlement à la direction transversale Y-Y. Les rangées de sièges 22 s'étendent de part et d'autre des allées inférieure 24 et supérieure 26, d'une paroi latérale 15a, 15b à l'autre.

Par le terme « rangée », on entend une pluralité de sièges 22 arrangés en ligne, notamment selon la direction transversale Y-Y. Les sièges 22 situés sur la même ligne de part et d'autre d'une des allées 24, 26 font partie de la même rangée.

Avantageusement, les sièges 22 d'une même rangée sont tous orientés dans une même direction, notamment selon la direction longitudinale X-X.

Par exemple, comme représenté sur la figure 1, chaque rangée de sièges 22 comprend quatre sièges 22, disposés de part et d'autre de l'allée inférieure 24 et de l'allée supérieure 26.

En variante, au moins un siège 22 est orienté selon la direction transversale Y-Y.

L'allée inférieure 24 et l'allée supérieure 26 s'étendent respectivement au niveau inférieur 16 et au niveau supérieur 18, sensiblement parallèlement à la direction longitudinale X-X, de manière à permettre la circulation des voyageurs dans la voiture 10.

Selon l'invention, le plancher 20 comprend une partie basse 28, une partie haute 30, et une partie de transition 32, disposées de manière contigüe les unes aux autres selon la direction transversale Y-Y.

Chacune des parties basse 28 et haute 30 s'étend sensiblement perpendiculairement à la direction d'élévation Z-Z. Elles sont disposées à des hauteurs respectives distinctes l'une de l'autre, mesurées depuis la paroi inférieure selon la direction d'élévation Z-Z jusqu'à une face supérieure respective de la partie basse 28 ou de la partie haute 30. La hauteur de la partie basse 28 est inférieure à la hauteur de la partie haute 30. La différence de hauteur entre la partie basse 28 et la partie haute 30 est notée *d*.

Le plancher 20 présente une épaisseur *e₁* sur la partie basse 28 et une épaisseur *e₂* sur la partie haute 30.

Avantageusement, les épaisseurs *e₁* et *e₂* sont égales l'une à l'autre.

La partie de transition 32 s'étend de manière inclinée par rapport à la direction d'élévation Z-Z, et forme par exemple un angle compris entre 45° et 75° avec le plan médian P.

En variante (non représentée), la partie de transition 32 forme une marche sensiblement verticale, orientée parallèlement au plan médian P.

La partie haute 28 s'étend entre la partie de transition 32 et une des parois latérales 15a, et la partie basse 30 s'étend entre la partie de transition 32 et l'autre paroi latérale 15b.

Avantageusement, la partie de transition 32 s'étend sensiblement à mi-distance des parois latérales 15a, 15b selon la direction transversale Y-Y, et est traversée par le plan médian P. Cela permet à la voiture 10 de présenter un centre de gravité plus proche du plan médian P et d'améliorer l'équilibre de la voiture 10.

Selon l'invention, le niveau inférieur 16 et le niveau supérieur 18 comprennent tous deux des sièges 22 situés au droit de la partie basse 28 et au droit de la partie haute 30 du plancher 20.

L'allée inférieure 24 s'étend, suivant la direction d'élévation Z-Z, au droit de la partie haute 30 du plancher 20 et l'allée supérieure 26 s'étend sur la partie basse 28 du plancher 20. Une hauteur sous plafond *h₁* sépare l'allée supérieure 26 de la paroi supérieure de la caisse 12, mesurée selon la direction d'élévation Z-Z, et une hauteur sous plafond *h₂* sépare l'allée inférieure 24 du plancher 20.

La disposition des allées 24, 26 permet d'augmenter les hauteurs sous plafond *h₁, h₂,* de sorte que les sommes des hauteurs sous plafond et de l'épaisseur du plancher 20, *h₁*+*h₂*+*e₁*, et *h₁*+*h₂*+*e₂* sont toutes deux supérieures à l'écartement *E* entre les parois supérieure et inférieure de la caisse 12, mesuré selon la direction d'élévation Z-Z. Ceci permet d'améliorer notablement le confort des voyageurs circulant dans la voiture 10 sur les allées 24, 26.

Dans l'exemple représenté sur la figure 1, la différence de hauteur *d* entre la partie basse 28 et la partie haute 30 est supérieur à l'épaisseur *e₁, e₂* du plancher 20 dans la partie basse 28 et dans la partie haute 30. On a donc la somme des hauteurs sous plafond *h₁*+*h₂* qui est directement supérieure à l'écartement *E.*

Avantageusement, chaque rangée de sièges 22 du niveau inférieur 16 comprend un unique siège 22 au droit de la partie haute 30 du plancher 20 et trois sièges 22 au droit de la partie basse 28 du plancher 20 selon la direction d'élévation Z-Z.

Dans ce cas, chaque rangée du niveau supérieur comprend un unique siège 22 au droit de la partie basse 28 du plancher 20 et trois sièges 22 au droit de la partie haute 30 du plancher 20 selon la direction d'élévation Z-Z.

En variante, chaque rangée de sièges 22 du niveau inférieur 16 comprend deux sièges 22 au droit de la partie haute 30 du plancher 20 et trois sièges 22 au droit de la partie basse 28 du plancher 20, selon la direction d'élévation Z-Z.

Dans ce cas, chaque rangée du niveau supérieur 18 comprend deux sièges 22 au droit de la partie basse 28 du plancher 20 et trois sièges 22 au droit de la partie haute 30 du plancher 20, selon la direction d'élévation Z-Z.

Plus généralement, chaque rangée du niveau inférieur 16 comprend un plus petit nombre de sièges 22 au droit de la partie haute 30 qu'au droit de la partie basse 28, et chaque rangée du niveau supérieur 18 comprend un plus petit nombre de sièges 22 au droit de la partie basse 28 qu'au droit de la partie haute 30. Cette répartition des sièges 22 permet de ménager plus facilement de l'espace pour les allées inférieure 24 et supérieure 26.

Notamment, chaque rangée de sièges 22 du niveau inférieur 16 et du niveau supérieur 18 comprend un siège 22 situé au moins en partie au droit de la partie de transition 32. Cela permet d'augmenter le nombre de sièges 22 par rangée sans empiéter sur l'espace consacré aux allées 24, 26.

Avantageusement, chaque siège 22 de chaque rangée présente une assise 34 située sensiblement à la même hauteur selon la direction d'élévation Z-Z que les assises 34 des autres sièges 22 de la rangée, pour les sièges 22 situés au droit de la partie basse 28 comme au droit de la partie haute 30 du plancher 20.

Cette disposition des sièges 22 permet d'améliorer l'aspect esthétique de l'espace interne 14, ainsi que le confort des voyageurs.

Avantageusement, des porte-bagages 36 s'étendent le long des parois latérales 15a, 15b, au niveau inférieur 16 et au niveau supérieur 18, au-dessus des rangées de sièges 22.

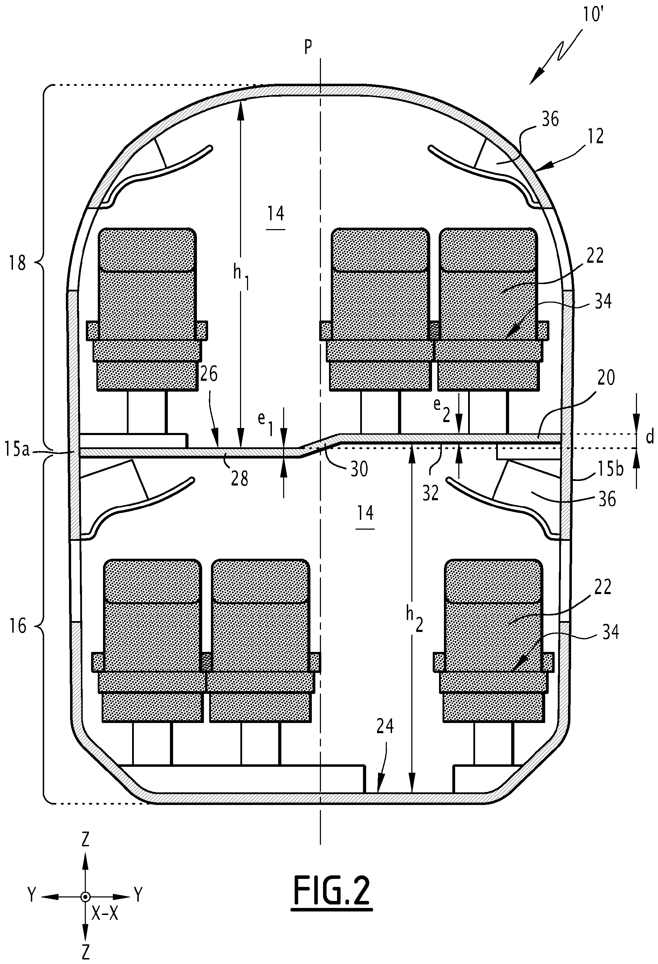

Une voiture 10' selon un deuxième mode de réalisation de l'invention est représentée sur la figure 2 et décrite ci-dessous.

La voiture 10' diffère de la voiture 10 en ce que chaque rangée de sièges 22 comprend seulement trois sièges 22.

Pour chaque rangée du niveau inférieur, deux sièges 22 sont situés au droit de la partie basse 28 du plancher 20 et un unique siège 22 est situé au droit de la partie haute 30 du plancher 20. A l'inverse, pour chaque rangée du niveau supérieur 18, un unique siège 22 est situé au droit de la partie basse 28 et deux sièges 22 sont situés au droit de la partie haute 30.

Les sièges 22 de la voiture 10' présentent une largeur augmentée selon la direction transversale Y-Y, ce qui améliore le confort des voyageurs qui les occupent. La voiture 10' est par exemple une voiture de véhicule ferroviaire ou routier de type première classe, qui présente un confort amélioré pour les voyageurs.

En variante, les rangées de sièges 22 du niveau inférieur 16 présentent un nombre de sièges différent de celui des rangées de sièges 22 du niveau supérieur 18. Par exemple, pour chaque rangée du niveau supérieur 18, un unique siège 22 est situé au droit de la partie basse 28 et deux sièges 22 sont situés au droit de la partie haute 30, alors que pour chaque rangée du niveau inférieur 16, trois sièges 22 sont situés au droit de la partie basse 28 du plancher 20 et un unique siège 22 est situé au droit de la partie haute 30 du plancher 20.

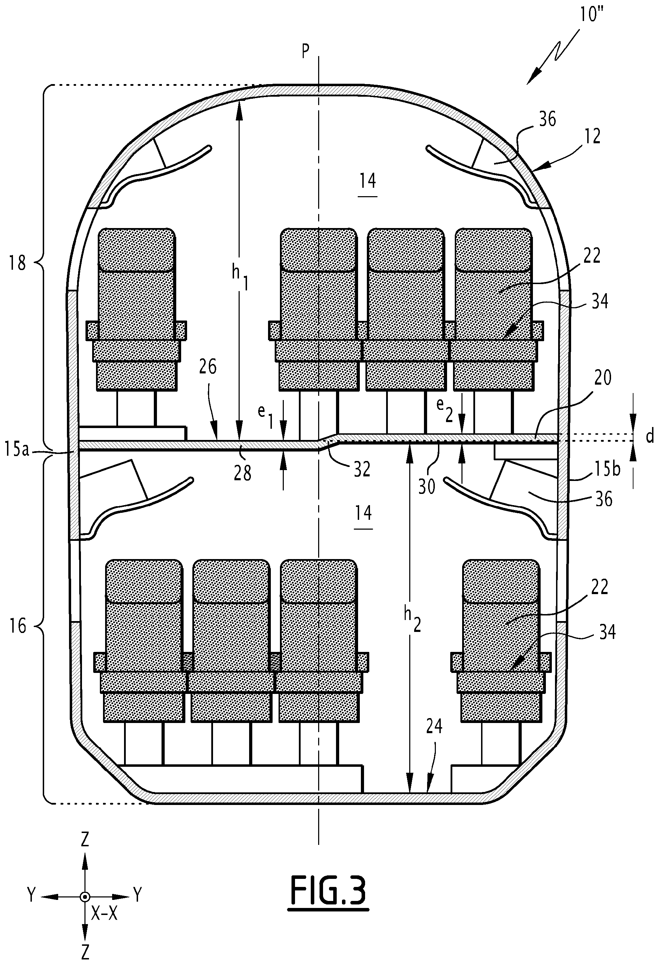

Une voiture 10" selon un troisième mode de réalisation de l'invention est représentée sur la figure 3 et décrite ci-dessous.

La voiture 10" est identique à la voiture 10, à l'exception de la différence de hauteur *d* entre la partie basse et la partie haute du plancher 20, qui est inférieure aux épaisseurs *e₁*, *e₂* du plancher 20.

On a alors la somme des hauteurs sous plafond *h₁+h₂* qui est inférieure à l'écartement *E*, mais la somme des hauteurs sous plafond et de l'épaisseur *h₁+h₂+e₁* qui reste supérieure à l'écartement *E.*

Une telle configuration permet d'avoir un plancher 20 de confection plus simple, et plus robuste, mais procure un espace de circulation légèrement moindre que dans les autres modes de réalisation décrits.

## Revendications

1. Voiture (10, 10', 10") à plusieurs niveaux (16, 18), comprenant un niveau inférieur (16) et un niveau supérieur (18) séparés par un plancher (20) intermédiaire, le plancher intermédiaire (20) comprenant une partie basse (28), une partie haute (30) et une partie de transition (32),
la partie basse (28) et la partie haute (30) s'étendant chacune entre la partie de transition (32) et une paroi latérale (15a, 15b) respective de la voiture (10, 10', 10"), à des hauteurs respectives différentes l'une de l'autre selon une direction d'élévation (Z-Z),
le niveau inférieur (16) comprenant une allée inférieure (24) de circulation des voyageurs, s'étendant au droit de la partie haute (30) du plancher (20) selon la direction d'élévation (Z-Z), le niveau supérieur (18) comprenant une allée supérieure (26) de circulation des voyageurs s'étendant sur la partie basse (28) du plancher (20),
chacun du niveau inférieur (16) et du niveau supérieur (18) comprenant des sièges (22) situés au droit de la partie basse (28) du plancher (20) selon la direction d'élévation (Z-Z) et des sièges (22) situés au droit de la partie haute (30) du plancher (20) selon la direction d'élévation (Z-Z),
**caractérisée en ce que** la partie de transition (32) s'étend de manière inclinée par rapport à la direction d'élévation (Z-Z) et **en ce qu'**au moins un siège (22) du niveau inférieur (16) et au moins un siège (22) du niveau supérieur (18) se situent au droit de la partie de transition (32) selon la direction d'élévation (Z-Z).

2. Voiture (10, 10', 10") selon la revendication 1, dans laquelle la partie de transition (32) est disposée sensiblement à mi-distance des parois latérales (15a, 15b) selon une direction transversale (Y-Y).

3. Voiture (10, 10', 10") selon la revendication 1 ou 2, dans laquelle les sièges (22) sont arrangés en rangées, chaque rangée s'étendant parallèlement à une direction transversale (Y-Y) allant d'une paroi latérale (15a, 15b) à l'autre, de part et d'autre de l'allée inférieure (24) et de l'allée supérieure (26).

4. Voiture (10, 10', 10") selon la revendication 3, dans laquelle chaque siège (22) de chaque rangée présente une assise (34) située sensiblement à la même hauteur selon la direction d'élévation (Z-Z) que les autres sièges (22) de ladite rangée.

5. Voiture (10, 10', 10") selon la revendication 3 ou 4, dans laquelle chaque rangée du niveau inférieur (16) comprend un plus petit nombre de sièges (22) situés au droit de la partie haute (30) du plancher (10) qu'au droit de la partie basse (28) du plancher (20) selon la direction d'élévation (Z-Z), et chaque rangée du niveau supérieur (18) comprend un plus petit nombre de sièges (22) situés au droit de la partie basse (28) du plancher (20) qu'au droit de la partie haute (30) du plancher (20) selon la direction d'élévation (Z-Z).

6. Voiture (10, 10', 10") selon la revendication 5, dans laquelle chaque rangée du niveau inférieur (16) comprend au plus un siège (22) situé au droit de la partie haute (30) du plancher (10) selon la direction d'élévation (Z-Z), et chaque rangée du niveau supérieur (18) comprend au plus un siège (22) situé au droit de la partie basse (28) du plancher (20) selon la direction d'élévation (Z-Z).

7. Voiture (10, 10', 10") selon la revendication 1, dans laquelle un siège (22) de chaque rangée se situe au droit de la partie de transition (32).

8. Voiture (10, 10', 10") selon l'une quelconque des revendications 1 à 7, dans laquelle le niveau inférieur (16) et le niveau supérieur (18) comprennent chacun des porte-bagages (36) s'étendant le long de chacune des parois latérales (15a, 15b).

## Patentansprüche

1. Mehrstöckiger (16, 18) Wagen (10, 10', 10 "), umfassend einen unteren Stock (16) und einen oberen Stock (18), die durch einen Zwischenboden (20) getrennt sind, wobei der Zwischenboden (20) einen Unterteil (28), einen Oberteil (30) und einen Übergangsteil (32) umfasst,
wobei sich Unter- (28) und Oberteil (30) jeweils zwischen dem Übergangsteil (32) und einer jeweiligen Seitenwand (15a, 15b) des Wagens (10, 10', 10") in Höhen erstrecken, die sich jeweils in einer Höhenrichtung (Z-Z) unterscheiden,
wobei der untere Stock (16) einen unteren Gang (24) für Reisende umfasst, der sich entlang des Oberteils (30) des Bodens (20) in Höhenrichtung (Z-Z) erstreckt, wobei der obere Stock (18) einen Gang (26) für Reisende umfasst, der sich auf dem Unterteil (28) des Bodens (20) erstreckt,
wobei der untere Stock (16) und der obere Stock (18) jeweils umfassen: Sitze (22), die entlang des Unterteils (28) des Bodens (20) in Höhenrichtung (Z-Z) angeordnet sind, und Sitze (22), die entlang des Oberteils (30) des Bodens (20) in Höhenrichtung (Z-Z) angeordnet sind,
**dadurch gekennzeichnet, dass** der Übergangsteil (32) sich schräg zur Höhenrichtung (Z-Z) erstreckt, und
dass mindestens ein Sitz (22) des unteren Stocks (16) und mindestens ein Sitz (22) des oberen Stocks (18) entlang des Übergangsteils (32) in Höhenrichtung (Z-Z) angeordnet sind.

2. Wagen (10, 10', 10") nach Anspruch 1, wobei der Übergangsteil (32) im Wesentlichen in Querrichtung (Y-Y) auf halbem Weg zwischen den Seitenwänden (15a, 15b) angeordnet ist.

3. Wagen (10, 10', 10") nach Anspruch 1 oder 2, wobei die Sitze (22) in Reihen angeordnet sind, wobei sich jede Reihe parallel zu einer Querrichtung (Y-Y) von einer Seitenwand (15a, 15b) zur anderen beiderseits des unteren Gangs (24) und des oberen Gangs (26) erstreckt.

4. Wagen (10, 10', 10") nach Anspruch 3, wobei jeder Sitz (22) jeder Reihe eine Sitzfläche (34) aufweist, die im Wesentlichen auf gleicher Höhe in Höhenrichtung (Z-Z) angeordnet ist wie die anderen Sitze (22) der Reihe.

5. Wagen (10, 10', 10") nach Anspruch 3 ou 4,
wobei jede Reihe des unteren Stocks (16), in Höhenrichtung (Z-Z) gesehen, eine kleinere Anzahl Sitze (22), die entlang des Oberteils (30) des Bodens (10) angeordnet sind, umfasst als entlang des Unterteils (28) des Bodens (20), und
wobei jede Reihe des oberen Stocks (18), in Höhenrichtung (Z-Z) gesehen, eine kleinere Anzahl Sitze (22), die entlang des Unterteils (28) des Bodens (20) angeordnet sind, umfasst als entlang des Oberteils (30) des Bodens (20).

6. Wagen (10, 10', 10") nach Anspruch 5,
wobei jede Reihe des unteren Stocks (16) höchstens einen Sitz (22) umfasst, der, in Höhenrichtung (Z-Z) gesehen, entlang des Oberteils (30) des Bodens (10) angeordnet ist, und
wobei jede Reihe des oberen Stocks (18) höchstens einen Sitz (22) umfasst, der, in Höhenrichtung (Z-Z) gesehen, entlang des Unterteils (28) des Bodens (20) angeordnet ist.

7. Wagen (10, 10', 10") nach Anspruch 1, wobei ein Sitz (22) jeder Reihe entlang des Übergangsteils (32) angeordnet ist.

8. Wagen (10, 10', 10") nach einem der Ansprüche 1 - 7,
wobei der untere Stock (16) und der obere Stock (18) jeweils Gepäckträger (36) umfassen, die sich entlang jeder der Seitenwände (15a, 15b) erstrecken.

## Claims

1. A car (10, 10', 10") with several levels (16, 18), comprising a lower level (16) and an upper level (18) that are separated by an intermediate floor (20), the intermediate floor (20) comprising a lower part (28), an upper part (30) and a transitional part (32),
the lower part (28) and the upper part (30) each extending between the transitional part (32) and a respective lateral wall (15a, 15b) of the car (10, 10', 10"), at different respective heights from one another along an elevation direction (Z-Z),
the lower level (16) comprising a lower aisle (24) for the circulation of travelers, extending in line with the upper part (30) of the floor (20) along the elevation direction (Z-Z), the upper level (18) comprising an upper aisle (26) for the circulation of travelers extending over the lower part (28) of the floor (20),
each of the lower level (16) and the upper level (18) comprising seats (22) located in line with the lower part (28) of the floor (20) along the elevation direction (Z-Z) and seats (22) located in line with the upper part (30) of the floor (20) along the elevation direction (Z-Z),
**characterized in that** the transitional part (32) extends in an inclined manner relative to the elevation direction (Z-Z) and **in that** at least one seat (22) of the lower level (16) and at least one seat (22) of the upper level (18) are located in line with the transitional part (32) along the elevation direction (Z-Z).

2. The car (10, 10', 10") according to claim 1, wherein the transitional part (32) is arranged substantially midway from the lateral walls (15a, 15b) along a transverse direction (Y-Y).

3. The car (10, 10', 10") according to claim 1 or 2, wherein the seats (22) are arranged in rows, each row extending parallel to a transverse direction (Y-Y) going from one lateral wall (15a, 15b) to the other, on either side of the lower aisle (24) and the upper aisle (26).

4. The car (10, 10', 10") according to claim 3, wherein each seat (22) of each row has a seat bottom (34) located substantially at the same height along the elevation direction (Z-Z) as the other seats (22) of said row.

5. The car (10, 10', 10") according to claim 3 or 4, wherein each row of the lower level (16) comprises a smaller number of seats (22) located in line with the upper part (30) of the floor (10) than in line with the lower part (28) of the floor (20) along the elevation direction (Z-Z), and each row of the upper level (18) comprises a smaller number of seats (22) located in line with the lower part (28) of the floor (20) than in line with the upper part (30) of the floor (20) along the elevation direction (Z-Z).

6. The car (10, 10', 10") according to claim 5, wherein each row of the lower level (16) comprises at most one seat (22) located in line with the upper part (30) of the floor (10) along the elevation direction (Z-Z), and each row of the upper level (18) comprises at most one seat (22) located in line with the lower part (28) of the floor (20) along the elevation direction (Z-Z).

7. The car (10, 10', 10") according to claim 1, wherein a seat (22) of each row is located in line with the transitional part (32).

8. The car (10, 10', 10") according to any one of claims 1 to 7, wherein the lower level (16) and the upper level (18) each comprise luggage racks (36) extending along each of the lateral walls (15a, 15b).
